# EUROPÄISCHE PATENTANMELDUNG

(11) **EP 0 621 307 A1**
(43) Veröffentlichungstag der Anmeldung: **26.10.1994**
(21) Anmeldenummer: 94105453.8
(22) Anmeldetag: 08.04.1994
(51) Int. Cl.: C08K 5/15, C08L 23/16, C08J 3/22

(54) **Tocopherol-Zubereitung**

(30) Priorität: 21.04.1993 DE 4312992
(71) Anmelder: RHEIN-CHEMIE RHEINAU GmbH, 68219 Mannheim (DE)
(72) Erfinder: Kleinknecht, Harald, Dipl.-Ing., D-55232 Alzey (DE)
(74) Vertreter: Gremm, Joachim, Dr.

(57) **Zusammenfassung**

α-Tocopherol-Zubereitung enthaltend 40 bis 80 Gew.-% Tocopherol, 10 bis 40 Gew.-% EPM-Kautschuk und 10 bis 50 Gew.-% neutralen Silikatfüllstoff oder Acrylatpolymerisat.

## Beschreibung

α-Tocopherol (Vitamin E) ist bekannt als Inhibitor für die Entstehung von Nitrosaminen bei der Vulkanisation von Kautschuk Seine Anwendung wird aber praktisch dadurch erschwert, daß es sich um eine hochviskose Masse handelt, die sich nur schwer einarbeiten läßt.

Es ist weiter bekannt, Kautschukchemikalien mit Bindern zu mischen und auf diese Weise in leicht handhabbare Form zu überführen Binder für pulverförmige Kautschukchemikalien sind z.B. Dienpolymere auch gemischt mit anderen polymeren Dispergatoren und evtl. Weichmacherölen. Binder für flüssige Kautschukchemikalien sind ebenfalls bekannt Sie entsprechen denen für pulverförmige Chemikalien, enthalten aber noch zusätzlich hochaktive mineralische Pulver, die dafür sorgen, daß die Mischung fest ist. Allerdings lassen sich so nur geringe Wirkstoffkonzentrationen erreichen.

Die Inhibierungswirkung für die Nitrosaminbildung von α-Tocopherol tritt nur unter ganz bestimmten Bedingungen ein. Beispielsweise wird sie verhindert durch die Anwesenheit von basischen Stoffen Es bilden sich Salze am phenolischen OH des Tocopherols, was die Wirkung aufhebt. In Gegenwart von sauren Stoffen wird nicht nur die Inhibierungswirkung aufgehoben, sondern es wird die Bildung von Nitrosamin geradezu katalysiert und verstärkt. In wäßrigem Milieu tritt dies bei pH-Werten von unter 6,4 ein.

Es wurde gefunden, daß eine Mischung aus α-Tocopherol, einem speziellen EPM-Kautschuk und entweder einem speziellen neutralen Silikatfüllstoff oder einem speziellen Acrylatpolymeren sowohl als Nitrosamininhibitor, leicht anwendbar als auch voll wirksam ist. Die erfindungsgemäße Mischung besteht aus 40 bis 80 Gew.-% α-Tocopherol, 10 bis 40 Gew.-% EPM-Kautschuk, 10 bis 50 Gew.-% neutralem Silikatfüllstoff bzw. Acrylatpolymerisat. Der EPM-Kautschuk kann auch eine Mischung aus EPM-Kautschuk und 0 bis 20 Gew.-% eines EPDM-Kautschuks sein Bevorzugt besteht die Mischung aus 50 bis 80 Gew.-% α-Tocopherol, 20 bis 40 Gew.-% EPM Kautschuk und 10 bis 50 Gew.-% Silicatfüllstoff bzw. Acrylpolymerisat.

Der erfindungsgemäß einsetzbare spezielle EPM-Kautschuk hat die folgende Zusammensetzung: 40 % Ethylen-Gehalt; sehr breite Molekulargewichtsverteilung. Er ist unter der Bezeichnung Vistalon 404 handelsüblich. Diesem Kautschuk kann ein EPDM-Kautschuk zugemischt werden mit 30 bis 40 % Ethylen-Gehalt und 2 bis 6 % Ethylennorbornen-Gehalt. Er ist als Buna AP 447 im Handel. Das spezielle Silikat hat die folgende Beschaffenheit: Oberfläche nach BET, 450, pH-Wert in 50%iger wässriger Dispersion: 7.

Es ist unter der Bezeichnung Sipernat 50 handelsüblich. Das Acrylpolymerisat enthält ein vernetztes Alkylacrylat-polymerisat als Basis auf den Seitenketten aus harzbildenden Monomeren (Methylmethacrylat) aufpolymerisiert sind.

Seine Dichte ist 1,06 und seine Schmelztemperatur 132 bis 149°C. Es ist unter der Bezeichnung Paraloid KM 232 B (Rohm + Haas) im Handel erhältlich.

Die erfindungsgemäße Mischung kann durch Mischen der Bestandteile in an sich bekannter Weise hergestellt werden. Sie kann bevorzugt in Mengen von 0,5 bis 3 phr (parts per 100 rubber) Kautschukmischungen zugesetzt werden und verhindert dann die Bildung von Nitrosaminen aus in der Mischung vorhandenen oder sich bildenden sekundären Aminen.

### Beispiele

Folgende Mischungen wurden hergestellt durch Vermischung der Bestandteile in einem Innenkneter.

**Tabelle 1**

| Mischung | 1 | 2 | 3 | 4 | 5 |
|---|---|---|---|---|---|
| α-Tocopherol Gew.-Tle. | 50 | 50 | 80 | 66,6 | 70 |
| "Vistalon 404" Gew.-Tle. | 20 | 16,7 | 12 | 5,2 | - |
| "Sipernat 50" Gew.-Tle. | 28 | 33,3 | 28 | 16 | - |
| "Paraloid KM 232B" Gew.-Tle. | - | - | - | 10,3 | 28 |
| "Buna AP 447" Gew.-Tle. | - | - | 2 | - | - |

### Anwendung:

Eine Kautschukmischung wurde hergestellt aus

| | Gew.-Tle |
|---|---|
| Butadien-Styrol-Copolymer-Kautschuk (Mooney-Viskosität ML 4' 50-52) | 75 |
| Naturkautschuk (Mooney-Viskosität ML 4' 50) | 25 |
| Ruß N 550 | 50 |
| Zinksalz gesättigter und ungesättiger Fettsäuren | 3 |
| aromatisches Öl | 10 |
| Schwefel | 1 |
| Tetramethylthiuramdisulfid | 1,3 |
| Benzothiazylsulfonmorpholid | 1,7 |

Bei der Vulkanisation wurde gefunden:
N-Nitrodimethylamin 9240 µg/kg
N-Nitrosomorpholin 11450 µg/kg
Der Versuch wurde wiederholt aber
3 Gew.-Tle der Mischung 1 aus Tabelle 1 vor der Vulkanisation zugesetzt.

Es wurde gefunden;
N-Nitrosodimethylamin 1390 µg/kg
N-Nitrosomorpholin 1080 µg/kg
also eine Verminderung um 85 % bzw. um 90 %.

## Patentansprüche

1. α-Tocopherol-Zubereitung enthaltend 40 bis 80 Gew.-% α-Tocopherol, 10 bis 40 Gew.-% EPM-Kautschuk und 10 bis 50 Gew.-% neutralen Silikatfüllstoff oder Acrylatpolymerisat.

2. Zubereitung nach Anspruch 1 worin der EPM Kautschuk 0 bis 20 Gew.-% EPDM-Kautschuk enthält.
